# EUROPEAN PATENT APPLICATION

(11) **EP 3 338 545 A1**
(43) Date of publication of application: **27.06.2018**
(21) Application number: 16836299.4
(22) Date of filing: 16.08.2016
(51) Int. Cl.: A01K 45/00

(54) **IMPROVEMENT TO NEEDLE FOR INNOCULATING NUTRIENTS INTO THE INNER ENVIRONMENT OF FERTILE EGGS**

(30) Priority: 18.08.2015 BR 102015019878
(71) Applicant: Ceva Saúde Animal Ltda., Santa Terezinha, Paulínia SP (BR)
(72) Inventor: Bastos, César da Silva, 13020-060 Campinas - SP (BR); Kassab, Marcelo, Campinas - SP (BR); Arsonval Wolf, Roque, Campinas - SP (BR)
(74) Representative: Cabinet Becker et Associés
(86) International application number: PCT/BR2016/050195
(87) International publication number: WO 2017/027948

(57) **Abstract**

An improvement to a needle for unnoculating nutrients into the inner environment of fertile eggs represents an inventive solution in the field of poultry farming, in particular in the sector of poultry breeding, specifically in the industry of equipment for the application of fluids into fertile eggs, in order to render nutrition feasible and effective in the pre-hatching stage of fertile eggs (Ov), being particularly useful for protecting the embryo, avoiding the direct intramuscular injection of nutrient into the embryo. An improved injection tool (4) has been designed for that purpose in the form of an injection needle with a rounded free end (42) and with a plurality of openings (43) next to same, through which the nutrient is injected, while the rounded free end (42) prevents piercing of the embryo (Em).

## Description

### APPLICATION FIELD

The present invention patent of title in the epigraph and object of description and claim in this application deals with an inventive solution with an outstanding benefit in the field of poultry, notably in the industry of equipment for application in poultry farming.

In addition, the present invention is particularly useful in rendering it feasible to meet the proven need for nutritional supplementation of fertile eggs, thus ensuring greater productivity of the poultry breeding process.

### BACKGROUND OF THE INVENTION

a. Introduction. In view of the field of application in the poultry segment, specialists knew that there are two control factors that must be taken care of in order to guarantee the quality of poultry products, especially broiler chickens, independently of disease control carried out through specific vaccination procedures and the nutritional control of the embryo.

By choosing the nutritional control as the development paradigm of the present invention, they also know the specific effects of broiler breeding in the field, since an earlier embryo's access to the nutrient leads to a stimulation of the digestive enzymes and the consequent further development of the intestinal villi (Geyra et al., 2001).

Foye et al., 2005, Smirnov et al., 2004 embrace this understanding, adding that the embryo's access to nutrients by improving the development of the digestive system, leads to a better productivity, where the broilers reach a greater weight in less time.

Meanwhile, it has been shown that the embryo has digestive enzymes (Sklan et al., 2003) that make nutrition possible in the pre-hatching phase.

In view of this scenario, in aviculture, "in-egg nutrition" has been considered in the pre-eclosion phase, whereby this process in tight synthesis can be explained as being performed by perforating the shell of the embryonated egg and followed by inoculation of the nutrient into the amniotic fluid by means of a syringe (Leitão et al., 2005; Gonzales et al., 2003), and, once this embryo's development environment has been supplemented nutritionally from the 15th day of incubation, it begins to ingest the amniotic fluid with a nutritional supplement (Klasing, 1998).

Thus, it is possible to conclude that the earlier feeding is administered to poultry, notably in their embryonic phase, the earlier their digestive tract develops a greater absorption capacity.

### REQUIREMENTS FOR THE INVENTION

In accordance with the requirements for the invention, the applicant conceived the *"IMPROVEMENT APPLIED TO NEEDLE FOR INNOCULATING NUTRIENTS INTO THE INNER ENVIRONMENT OF FERTILE EGGS"* provided with novelty associated with inventive activity, since it does not follow in an obvious or obvious way from other anticipated techniques by the state of the art, thus conferring advantages from the industrial, commercial and technical points of view.

In addition, the "invention" is provided with industrial applicability, being economically viable and, therefore, takes into account the strictness of the requirements of patentability, notably as a patent of invention, in accordance with the provisions of articles 8 and 13 of Law No. 9.279.

### BACKGROUND OF THE TECHNIQUE

In order to provide veracity, and to consolidate the explicit context in the topics of the introductory table, an explanation will be given on the state of the art regarding techniques of fluid inoculation in eggs, and, after a critical analysis of these by experts in the subject field who evaluate and identify its limiting aspects, thus consolidating the identification of previously cited demand.

a. State of the art of the technique: fluid inoculation of fertile eggs is a well-known practice and is particularly widespread for the inoculation of vaccines.

Studies performed in patent databases reveal a number of techniques for the inoculation of vaccines into fertile eggs, and essentially all have the same fundamental principle, which resides in the use of a punch to create an opening in the shell of the egg, and then a needle is applied which enters into the egg, depending on the type of application and vaccine, for example, the needle is introduced until it reaches the embryo and penetrates into its muscular tissue, allowing the vaccine to be injected subsequently.

Within this fundamental concept, it is pertinent to refer to U.S. Patent 4,903,635, filed on June 18, 1987, with title "HIGH SPEED AUTOMATED INJECTION SYSTEM FOR AVIAN EMBRYOS", which can be described as an automated injection system of high-speed fluid substances within the interior of fertile eggs, including an eggshell opening device in the form of a tubular punch, and a device for injecting fluid into the egg in the form of an injection needle positioned inside of the tubular punch.

By choosing the fluid injection device as the paradigm of study and considering that hitherto known solutions contemplate the administration of vaccines, the injection needle has a constructive concept similar to that of the needles for intramuscular injection, which have a beveled end.

Current egg vaccine delivery devices have shear-edged needles that allow inoculation into both the amniotic fluid and into the embryo, either intramuscularly or subcutaneously.

b. Identification of problems: although sharp-edged needles are very suitable for the injection of vaccines since they are intended to facilitate intramuscular or subcutaneous injection, however, this condition is not favorable for the inoculation of nutrients, since this inoculation must be restricted to the amniotic liquid.

Considering that the technique of inoculating nutrients in fertile eggs is an innovative technique, and although the same vaccine inoculation system is used, the inventors understand that the application of nutrients to the tissue or to the embryo's muscle can generate some kind of damage in the development of the embryo, and even in poultry development.

### DESCRIPTION OF THE INVENTION

a. Development paradigm: it is a fact that poultry receiving nutrients still in their embryonic phase, notably with about 18 days of incubation, reach higher production rates, as specified in the time decrease for poultry processing.

As a consequence of better nutrition at the end of the poultry breeding cycle, there will also be a reduced consumption of inputs, thus optimizing the consumption of water, animal feed.

b. Objective: it is an objective of the present invention to provide an alternative to the concept of fluid injection in the interior of the fertile egg, in particular for the injection of nutrients, which ensures the efficient inoculation of nutrients, as homogeneous as possible, basically near the amniotic fluid;

Furthermore, it is the object of the present invention to make possible that the inoculation of nutrients does not cause aggression to the embryo's body, thus avoiding possible impairment of embryo and poultry development before its slaughtering.

b. Distinctive feature: In order to render the objects of the invention feasible, a new constructive design has been conceived for the injection needle, which free end now become rounded, with lateral openings for injecting the nutrient into the environment of the amniotic fluid.

The rounded tip is a guarantee that even if the needle interferes with the embryo's body, it will not pierce it.

In turn, the lateral openings guarantee a homogenous and effective distribution of the nutrient.

### DESCRIPTION OF THE FIGURES

To complement the present description in order to obtain a better understanding of the features of the present invention, and according to a preferred practical embodiment thereof, the description is followed by a set of drawings, wherein:
- Fig. 1 is an illustrative representation of a fluid inoculation system into fertile eggs, where egg- and inoculation modules are emphasized;
- Fig. 2 is an illustrative representation of the egg module, in the form of a fertile egg, suitably positioned to receive fluid administration by means of the inoculation module in the form of a device suitable for that purpose, formed by the access opening tube in the shell and the conventional injection needle, in condition of access opening in the shell;
- Fig. 3 is an illustrative depiction of a fertile egg suitably positioned to receive the administration of fluid by means of a device suitable for such purpose under condition of penetration of the conventional injection needle into position in the amniotic fluid;
- Fig. 4 is an illustrative representation of a fertile egg suitably positioned to receive the administration of fluids by means of a device suitable for this purpose, under condition of the penetration condition of the conventional injection needle into the embryo itself;
- Fig. 5a is a side view of a conventional injection needle, demonstrating its constructiveness;
- Fig. 5b is an "AA" cross-sectional view of a conventional injection needle, demonstrating its constructiveness;
- Fig. 6 is an illustrative representation of the egg module, in the form of a fertile egg, suitably positioned to receive the administration of fluid by means of the inoculation module in the form of a device suitable for that purpose, formed by access opening tube in the shell and optimized needle Injector, in open access condition in the shell;
- Fig. 7 is an illustrative representation of a fertile egg suitably positioned to receive the administration of fluid by means of a device suitable for that purpose under condition of penetration of the improved injection needle into position in the amniotic fluid;
- Fig. 8 is an illustrative representation of a fertile egg suitably positioned to receive the administration of fluid by means of a device suitable for that purpose, under condition of penetration of the improved injection needle into the embryo itself;
- Figure 9a is a side view of an improved injection needle, demonstrating its constructiveness; and
- Figure 9b is an "AA" cross-sectional view of an improved injection needle, demonstrating its constructiveness.

### DETAILED DESCRIPTION

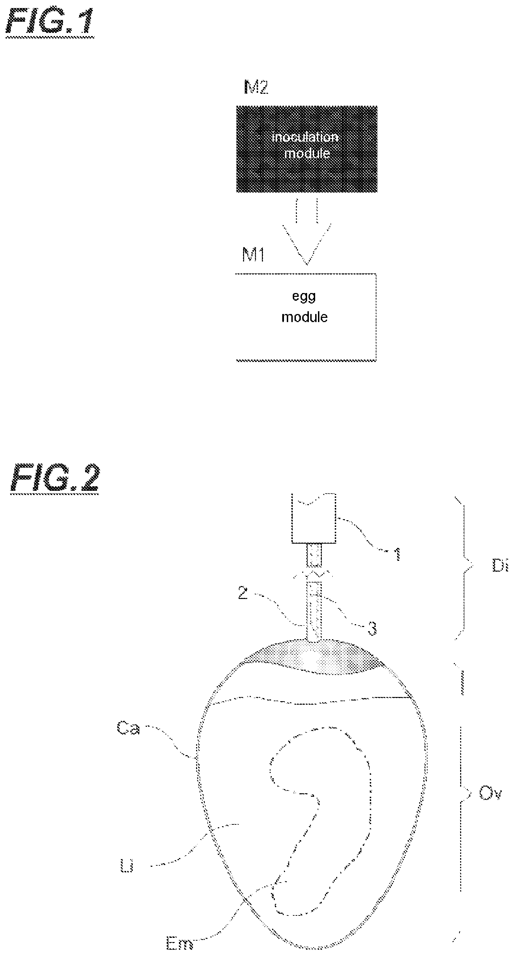

The following detailed description should be read and interpreted with reference to the presented drawings, showing the state of the art for inoculating fluids into the interior of eggs, and device for this purpose, and, as complement, is disclosed the needle improvement for inoculating nutrients into the inner environment of fertile eggs, and the novel condition of inoculation of nutrients not intended to limit the scope of the invention, this being only limited as explicit in the framework of claims.
a. State of the art: as shown in Fig. 1, the system for inoculating fluid into fertile eggs is disclosed which, in a referential form is formed by:
   a.1 egg module (m1) consisting of egg (Ov) shell (Ca), amniotic fluid (Li) and embryo (Em), see Fig. 2;
   a.2 inoculation module (m2), formed by an inoculation device (Di) composed of an operating mechanism (1) which supports the shell perforation tool (2), in the form of a tubular punch whose interior also houses the injection tool (3), see Fig. 2;

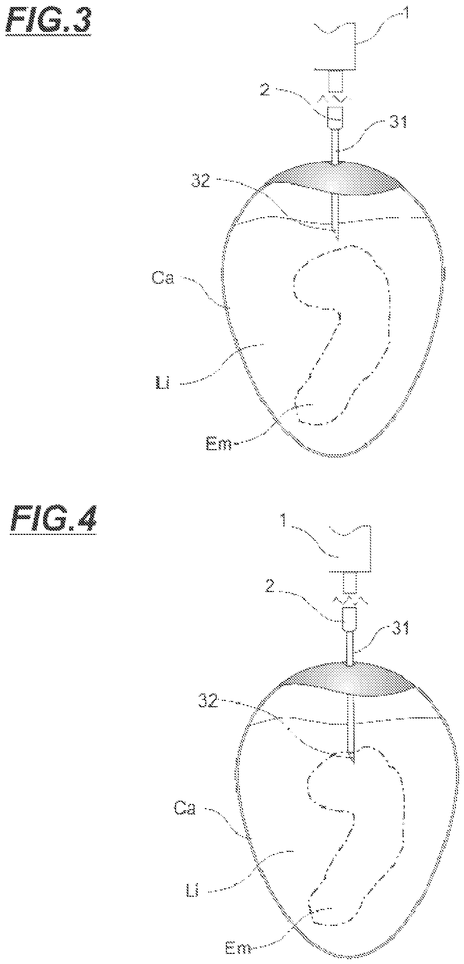

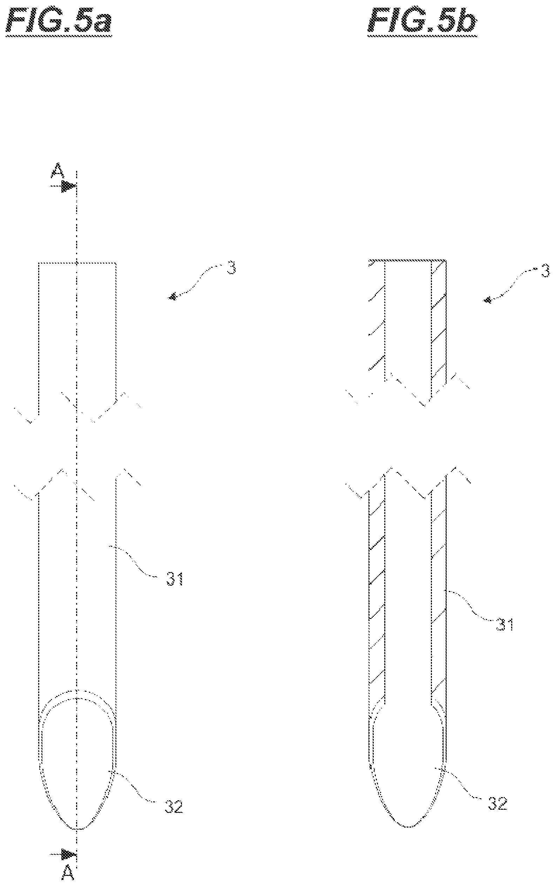

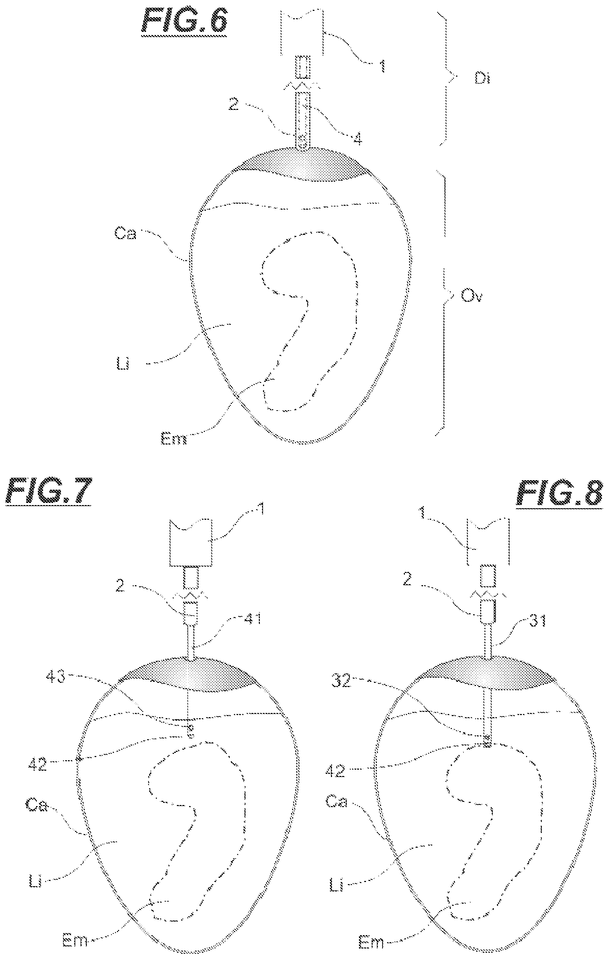

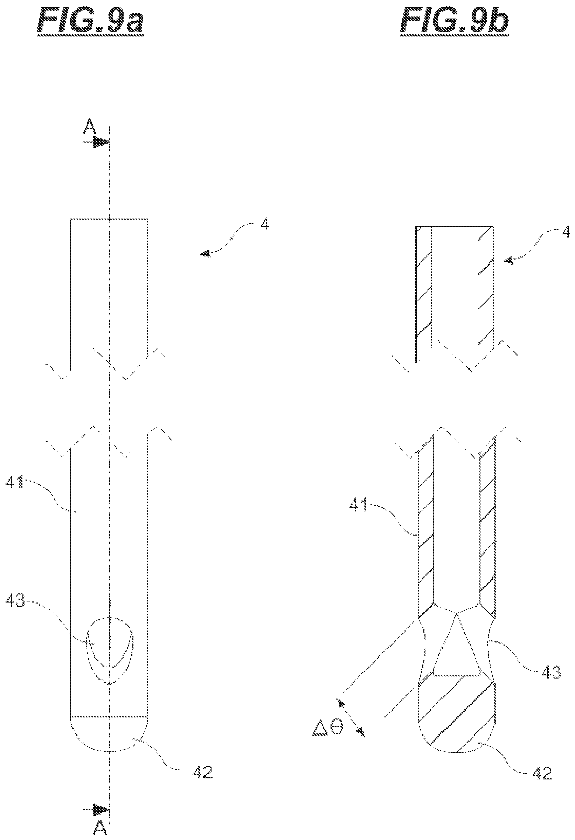

   Since the scope of the present invention is restricted to innovation applied in the injection tool, its constructive concept detail will be shown in the form of a conventional injection needle, which is formed by a body (31) and at its free end is defined a cutting bevel (32), as evidenced in Figs. 5a and 5b,
   The technical effect obtained with this conventional configuration of the inoculation device (Di) means the possibility of needle access (3) inside the egg (Ov), its beveled end (32) being positioned only in the amniotic fluid (Li), see Fig. 3 as penetrating into the embryo (Em), see Fig. 4, which, as already discussed in the technique section, is appropriate for inoculating vaccines, but, in principle, is not a desired condition for the inoculation of nutrients.
b. About the inventive technique: as shown in Fig. 6, the system formed for inoculating fluid within fertile eggs is disclosed (Ov), which again in a re-missive form is formed by:
   b.1 Egg module (m1), consisting of a shell (Ca), amniotic fluid (Li) and embryo (Em), see Fig. 6;
   b.2 inoculation module (m2): comprising an operating mechanism (1) supporting the shell perforation tool (2) in the form of a tubular punch whose interior also houses the improved injection tool (4), in the form of an injection needle formed of a body (41), whose free end (42) is rounded, a plurality of openings (43) which are provided with outlet angle (Δθ) being defined adjacent to this rounded end, wherein in a preferred embodiment at least two apertures are defined (43), as evidenced in Figs. 9a and 9b;

The technical effect obtained with this configuration of the inoculation device (Di) with the improved injection tool (4) means the possibility of access of the needle (4) inside the egg (Ov), and its rounded end (42) can be positioned only in the amniotic fluid (Li), see Fig. 7 and at the most compressing the embryo (Em), see Fig. 8, which, as already discussed in the technical section, is the appropriate scenario for the nutrient inoculation condition, whereby the nutrient is injected through the openings (43).

In addition, a technical specification of the inventive concept of the improved injection tool (4), its base (41) with a diameter of 1 mm and openings (43) with a diameter of 0.60 mm.

The choice of the preferred embodiment of the subject invention in this application, as described in this detailing section, is only given as an example. Any changes, modifications, and variations can be made to any other embodiments of the improved injection tool (4), which changes may be designed by those skilled in the art, however, without diverging from the object disclosed in the present patent application, which is exclusively defined by the appended claims.

It appears from what has been described and illustrated that the improvement applied to needle for inoculating nutrients into the inner environment of fertile eggs as claimed herein, complies with the rules governing the patent in the light of the Industrial Property Law, and deserving from what was exposed and as a consequence, the respective privilege.

## Claims

1. Improvement applied to needle for inoculating nutrients into the inner environment of fertile eggs, wherein a system for inoculating fluid inside fertile eggs is formed by an egg module (m1), consisting of a shell (Ca), amniotic fluid (Li) and embryo (Em), which is subject to the action of the inoculation module (m2), comprising an operating mechanism (1) supporting the shell perforation tool (2) in the form of a tubular punch whose interior also houses the improved injection tool (4), in the form of an injection needle **characterized in that** it comprises a body (41) with free rounded end (42), and, adjacent to this rounded end (42) is defined a plurality of openings (43) with outlet angle (Δθ).

2. Improvement applied to needle for inoculating nutrients into the inner environment of fertile eggs, according to claim 1, wherein in one embodiment the improved injection tool (4) is **characterized by** having two openings (43).

3. Improvement applied to needle for inoculating nutrients into the inner environment of fertile eggs, according to claim 1, wherein in one embodiment, the improved injection tool (4) is **characterized by** a base (41) with a diameter of 1 mm and openings (43) with a diameter of 0.60 mm.
